# EUROPÄISCHE PATENTSCHRIFT

(11) **EP 3 609 683 B1**
(45) Veröffentlichungstag und Bekanntmachung des Hinweises auf die Patenterteilung: **12.01.2022**
(21) Anmeldenummer: 18711081.2
(22) Anmeldetag: 12.03.2018
(51) Int. Cl.: B29C 64/35, B29C 64/379, B22F 3/105

(54) **VORRICHTUNG UND VERFAHREN ZUM ENTPACKEN EINES DURCH SCHICHTWEISES AUFTRAGEN HERGESTELLTEN OBJEKTS**
APPARATUS AND METHOD FOR UNPACKING AN OBJECT PRODUCED BY APPLICATION IN LAYERS
DISPOSITIF ET PROCÉDÉ D'EXTRACTION D'UN OBJET FABRIQUÉ PAR APPLICATION DE COUCHES

(30) Priorität: 13.04.2017 DE 102017108080
(43) Veröffentlichungstag der Anmeldung: 19.02.2020
(73) Patentinhaber: TRUMPF Laser- und Systemtechnik GmbH, 71254 Ditzingen (DE)
(72) Erfinder: LAIB, Wolfgang, 74354 Besigheim (DE); MARGOLF, Andreas, 70825 Korntal-Münchingen (DE); HAUGK, Ben, 70469 Stuttgart (DE); MIMRA, Christopher, 88316 Isny (DE); GIEK, Daniel, 70199 Stuttgart (DE)
(74) Vertreter: Mammel und Maser
(86) Internationale Anmeldenummer: PCT/EP2018/056075
(87) Internationale Veröffentlichungsnummer: WO 2018/188867

(56) Entgegenhaltungen:
- WO-A1-2017/017273
- DE-A1-102007 014 968
- DE-A1-102013 223 407
- DE-U1-202013 009 787
- DE-U1-202016 003 042

## Beschreibung

Die Erfindung betrifft eine Vorrichtung zum Entpacken eines in einem Wechselbehälter durch schichtweises Aufbringen und selektives Verfestigen eines pulverförmigen Aufbaumaterials hergestellten dreidimensionalen Objektes sowie ein Verfahren zum Entpacken eines dreidimensionalen Objekts aus einem Wechselbehälter.

Aus der DE 20 2013 009 787 U1 ist eine Bearbeitungsanlage zur Herstellung von Werkstücken durch Beaufschlagen von Rohstoffpulverschichten mit elektromagnetischer Strahlung bekannt. Durch das Einwirken von elektromagnetischer Strahlung auf das Rohstoffpulvermaterial erfolgt eine Verfestigung des Pulvermaterials, wobei angrenzend an ein entstehendes Objekt unverfestigt gebliebenes Rohstoffpulvermaterial in einer Baukammer verbleibt. Nach der Beendigung eines Bauprozesses zur Herstellung des Objektes wird die Baukammer einer Wechselstation und darauffolgend einer nachgeordneten Parkstation sowie wiederum einer nachfolgend angeordneten Rotationsstation zugeführt. In der Rotationsstation wird die Baukammer mit einem Baukammeraufsatz versehen und um 180° gedreht. Nicht verbrauchtes Rohstoffpulvermaterial fällt aufgrund der Schwerkraft aus der Baukammer. Anschließend wird die Baukammer zurückgedreht und in eine nachfolgende Entnahmestation übergeführt. In der Entnahmestation wird eine Substratplatte, auf der das Objekt aufgebaut ist, innerhalb der Baukammer durch einen Motor der Entnahmestation verfahren, sodass das Objekt entnommen werden kann.

Aus der WO 2017/017 273 A1 ist des Weiteren eine Anlage zur Herstellung eines Objektes durch schichtweises Aufbringen und selektives Verfestigen eines pulverförmigen Aufbaumaterials bekannt. Ein Wechselbehälter, in dem eine Substratplatte mit dem aufgebauten Objekt vorgesehen ist, wird einer Entleerungsstation zugeführt. Dabei wird die Substratplatte aus dem Wechselbehälter herausgefahren und mit einem Wechselbehälteraufsatz fest verbunden. Anschließend wird der Wechselbehälteraufsatz mit der daran fixierten Substratplatte um eine horizontale Achse gedreht. Nach dem Entleeren von nicht-verfestigtem Aufbaumaterial wird der Baukammeraufsatz zurückgeschwenkt, sodass die Substratplatte wiederum in den Wechselbehälter eingefahren und das Bauteil weitertransportiert werden kann.

Aus der DE 10 2013 223 407 A1 ist eine Vorrichtung und ein Verfahren zum schichtweisen Herstellen eines dreidimensionalen Objekts sowie zum Auspacken des fertiggestellten Objekts bekannt. Zur Herstellung eines durch schichtweisen Aufbringen und selektiven Verfestigen eines pulverförmigen Aufbaumaterials hergestellten dreidimensionalen Objekts wird eine Lasersintervorrichtung eingesetzt. Diese enthält eine Belichtungsvorrichtung mit einem Laser, durch welchen das pulverförmige Aufbaumaterial gezielt zur Herstellung des dreidimensionalen Objektes verfestigt wird. Dieses Aufbaumaterial ist in einem Wechselbehälter vorgesehen. Dieser umfasst eine Substratplatte, auf welcher das dreidimensionale Objekt aufgebaut wird. Nach der Herstellung des dreidimensionalen Objekts nimmt der Wechselbehälter sowohl das hergestellte dreidimensionale Objekt als auch das das dreidimensionale Objekt umgebende, unverfestigt gebliebene Aufbaumaterial auf. Zum Entpacken des dreidimensionalen Objekts wird der Wechselbehälter innerhalb der Lasersintervorrichtung in eine benachbarte Vorrichtung zum Entpacken des dreidimensionalen Objekts geschoben. Anschließend erfolgt eine Drehbewegung des Wechselbehälters um beispielsweise 180° mittels einer Drehvorrichtung, die den Wechselbehälter aufnimmt. Das unverfestigte Aufbaumaterial wird in einem unterhalb der Drehvorrichtung angeordneten Auffangbehälter aufgenommen. Anschließend wird die Drehvorrichtung wieder in eine aufrechte Position zurückgedreht und der Wechselbehälter herausgeführt. Darauffolgend wird die Substratplatte aus dem Wechselbehälter zusammen mit dem Objekt entnommen. Dieser Entpackungsvorgang bis zur Entnahme der Objekte ist zeitaufwändig.

Der Erfindung liegt die Aufgabe zugrunde, eine Vorrichtung sowie ein Verfahren zum prozessoptimierten Entpacken eines in einem Wechselbehälter durch schichtweises Aufbringen und selektives Verfestigen eines pulverförmigen Aufbaumaterials hergestellten dreidimensionalen Objekts vorzuschlagen.

Diese Aufgabe wird durch eine Vorrichtung zum Entpacken eines in einem Wechselbehälter durch schichtweises Aufbringen und selektives Verfestigen eines pulverförmigen Aufbaumaterials hergestellten dreidimensionalen Objekts aus dem das Objekt umgebenden, unverfestigten Aufbaumaterial, welche eine Wendevorrichtung umfasst, die den Wechselbehälter aus einer aufrechten Position in eine Entnahmeposition zum Abführen des unverfestigten Aufbaumaterials dreht, gelöst, bei der das dreidimensionale Objekt nach dem Entpacken des unverfestigten Aufbaumaterials durch eine an der Wendevorrichtung angeordneten Antriebseinrichtung in eine Entnahmeposition zum Wechselbehälter verfahrbar ist. Der Wechselbehälter ist in die Wendevorrichtung einsetzbar und fixierbar und die Wendevorrichtung um eine horizontal ausgerichtete Drehachse drehbar. Die Wendevorrichtung umfasst eine Halteplatte, auf der der Wechselbehälter aufsetzbar ist. Dadurch ist nach dem Entpacken und dem Überführen der Wendevorrichtung in die aufrechte Position das Objekt sofort zur Entnahme bereitgestellt. Zum einen kann das Objekt oder eine Substratplatte, auf der das Objekt aufgebaut ist, direkt aus dem Wechselbehälter entnommen werden. Zum anderen kann der gesamte Wechselbehälter aus der Wendeeinrichtung entnommen werden und gegebenenfalls einer weiteren Bearbeitungsstation zugeführt werden, um die Vorrichtung zum Entpacken eines weiteren hergestellten dreidimensionalen Objekts in einem Wechselbehälter wieder für den nachfolgenden Entpackungsvorgang bereitzustellen. Somit kann eine Prozessoptimierung erzielt werden.

Vorteilhafterweise ist vorgesehen, dass durch die Antriebseinrichtung nach dem Entpacken des dreidimensionalen Objekts eine das Objekt tragende Substratplatte in die Entnahmeposition zum Werkstückbehälter verfahrbar ist. Dabei wird die Substratplatte wenigstens so weit an einen oberen Randbereich des Wechselbehälters verfahren, dass entweder die Entnahme des Objektes oder die Entnahme der das Objekt tragenden Substratplatte in einfacher Weise ermöglicht ist. Bevorzugt ist das Überführen der Substratplatte in die Entnahmeposition noch bei einem geschlossenen Wechselbehälter vorgesehen. Diese Verfahrbewegung kann sowohl in einer aufrechten Position als auch in eine Entleerungsposition oder einer dazwischenliegenden Position des Wechselbehälters beginnen.

Die Durchführung der Drehbewegung der Wendevorrichtung aus einer aufrechten Position in eine Entleerungsposition und zurück kann manuell oder über einen elektrisch gesteuerten Antrieb erfolgen. Die Drehbewegung der Wendevorrichtung kann aus der aufrechten Position in die Entleerungsposition und entgegengesetzter Richtung wieder zurück in die aufrechte Position erfolgen. Alternativ kann auch eine Drehung der Wendevorrichtung um 360° um die Drehachse vorgesehen sein.

Des Weiteren weist die Wendevorrichtung, insbesondere die Halteplatte bevorzugt eine Spannvorrichtung auf, sodass der Wechselbehälter lösbar zur Halteplatte fixiert ist. Dadurch kann dieser Wechselbehälter mit dem hergestellten dreidimensionalen Objekt aus einer Vorrichtung zur schichtweisen additiven Fertigung von Bauteilen, insbesondere Lasersintereinrichtung (Selective Laser Sintering, SLS) oder Laserschmelzeinrichtung (Laser Metal Fusion, LMF, oder Selective Laser Melting, SLM), vollständig entnommen und vorzugsweise in eine getrennt dazu angeordnete Wendevorrichtung eingesetzt werden. Dadurch kann in der Lasersintervorrichtung unmittelbar nach der Entnahme des einen Wechselbehälters ein weiterer Wechselbehälter zum Aufbau eines neuen dreidimensionalen Objekts eingesetzt werden.

An dem Wechselbehälter, insbesondere an einem in dem Wechselbehälter verfahrbaren Kolben, an welchem die Substratplatte befestigbar ist, ist ein Spannelement der Spannvorrichtung vorgesehen. An der Antriebseinrichtung ist ein komplementäres Spannelement der Spannvorrichtung vorgesehen, sodass beim Einsetzen des Wechselbehälters in die Wendevorrichtung, insbesondere beim Positionieren auf die Halteplatte ein Ineinandergreifen und Verspannen der Spannelemente erfolgen kann. Dadurch ist eine lösbare Verbindung zwischen dem Wechselbehälter, insbesondere dem Kolben des Wechselbehälters, und der Antriebseinrichtung, gegeben.

Die in der Wendevorrichtung vorgesehene Spannvorrichtung umfasst einen Verspannmechanismus mit einem Fang- und Ausrichtdorn sowie einer komplementären Aufnahme. Dadurch kann ein selbständiges Verriegeln der Spannvorrichtung nach dem Aufsetzen des Wechselbehälters auf die Halteplatte erfolgen. Dies ermöglicht wiederum eine Prozessoptimierung.

Eine weitere vorteilhafte Ausgestaltung der Vorrichtung sieht vor, dass die Wendevorrichtung einen Einsetzbereich oder eine Einsetzöffnung aufweist, der gegenüberliegend zumindest eine Anlagefläche vorgesehen ist, die zur Halteplatte zum lagerichtigen Einsetzen des Wechselbehälters ausgerichtet ist. Dadurch kann das Einsetzen und Positionieren des Wechselbehälters in die Wendevorrichtung erleichtert werden.

An der Wendevorrichtung ist bevorzugt ein Deckel zum Verschließen des Wechselbehälters vorgesehen. Dieser Deckel kann mediendicht, insbesondere gasdicht, an dem Wechselbehälter anliegen, sodass das unverfestigte Aufbaumaterial nicht austreten kann. Vorteilhafterweise weist der Deckel einen Auffangbehälter mit einer Abgabeöffnung auf, sodass sich das unverfestigte Material in einer Entleerungsposition der Wendevorrichtung zunächst im Auffangbehälter sammeln kann.

Vorteilhafterweise ist in einer Entnahmeposition der Wendevorrichtung die Abgabeöffnung am Auffangbehälter des Deckels einem Aufnahmebehälter zugeordnet. In diesem Fall kann das unverfestigte Aufbaumaterial durch die Schwerkraft in den Aufnahmebehälter fallen. Alternativ kann vorgesehen sein, dass an der Abgabeöffnung ein Absaugschlauch einer Absaugvorrichtung anschließbar ist, sodass zumindest in der Entleerungsposition der Wendevorrichtung das unverfestigte Aufbaumaterial mit der Absaugvorrichtung abgesaugt und einem Sammelbehälter zugeführt werden kann.

An einem Wandabschnitt der Wendevorrichtung oder dem Deckel der Wendevorrichtung ist vorzugsweise ein Verschluss, insbesondere ein Schnellverschluss vorgesehen, um ein weitere Prozessoptimierung zu erzielen.

Der Deckel ist bevorzugt an zumindest einem Wandabschnitt der Wendevorrichtung aufgenommen und aus einer Öffnungsposition in die Schließposition zum Wechselbehälter überführbar. In einer Öffnungsposition kann der Deckel gegenüber dem Wechselbehälter nach oben abgehoben werden. Alternativ kann der Deckel auch durch eine Schwenkbewegung um eine horizontale Achse oder eine Drehbewegung um eine vertikale Achse in eine Öffnungsposition geschwenkt oder verdreht werden. Bevorzugt ist der Deckel durch eine Linearführung aus der Öffnungsposition in die Schließposition verfahrbar.

Eine weitere vorteilhafte Ausgestaltung der Vorrichtung sieht vor, dass die Antriebseinrichtung einen Hubzylinder aufweist, der pneumatisch, elektrisch, hydraulisch oder dergleichen angetrieben ist.

Des Weiteren ist bevorzugt vorgesehen, dass eine Ausfahrbewegung des Hubzylinders der Antriebseinrichtung durch einen Anschlag begrenzt ist, der in seiner Lage insbesondere einstellbar ist. Dadurch kann eine einfache und individuelle Anpassung an verschiedene Größen des Wechselbehälters erfolgen. Zudem ist sichergestellt, dass der Kolben innerhalb des Wechselbehälters verfahrbar bleibt und gegen ungewolltes Ausfahren aus dem Wechselbehälter gesichert ist.

Des Weiteren kann vorteilhafterweise vorgesehen sein, dass die Wendevorrichtung um ihre Längsachse drehbar angetrieben ist. Dadurch kann zusätzlich zur Drehbewegung um die horizontale Achse eine weitere Drehbewegung überlagert werden, wodurch ein verbessertes Entpacken des unbefestigten Aufbaumaterials ermöglicht ist. Dies kann insbesondere bei einer innerhalb eines dreidimensionalen Objektes gebildeten Hohlraumstrukturen, insbesondere Kanälen, Kammern und/oder Hinterschneidungen, von Vorteil sein.

Eine weitere alternative Ausführungsform der Vorrichtung sieht vor, dass der Deckel der Wendevorrichtung ein Bauvolumen aufweist, in welchem ein Objekt bei einer geschlossenen Anordnung des Deckels zum Wechselbehälter vollständig aus dem Wechselbehälter herausgefahren und innerhalb des Deckels anordenbar ist. Insbesondere weist der Deckel zumindest einen Handschuheingriff für ein manuelles Entpacken auf. Dadurch kann bei schwierig zu entpackenden Objekten eine zusätzliche manuelle Nacharbeit in einem hermetisch geschlossenen Raum durchgeführt werden. Vorteilhafterweise wird zum Entpacken eine Drucklufteinrichtung verwendet, um das noch verbleibende pulverförmige Aufbaumaterial von dem hergestellten dreidimensionalen Objekt abzublasen.

Die der Erfindung zugrundeliegende Aufgabe wird des Weiteren durch ein Verfahren zum Entpacken eines in einem Wechselbehälter durch schichtweises Aufbringen und selektives Verfestigen eines pulverförmigen Aufbaumaterials hergestellten dreidimensionalen Objekts aus dem das Objekt umgebenden unverfestigt gebliebenen Aufbaumaterials, insbesondere mit einer Vorrichtung nach einer der vorbeschriebenen Ausführungsformen, gelöst, bei dem der Wechselbehälter in eine Wendevorrichtung eingesetzt wird, die Wendevorrichtung aus einer aufrechten Position in eine Entleerungsposition zum Abführen des unverfestigten Aufbaumaterials gedreht wird und nach dem Entpacken des hergestellten Objekts die Wendevorrichtung in die aufrechte Position übergeführt wird, wobei das Objekt mit einer Antriebseinrichtung der Wendevorrichtung in eine Entnahmeposition zum Wechselbehälter verfahren wird. Diese Verfahrbewegung in die Entnahmeposition zum Wechselbehälter kann während dem Entpacken erfolgen oder während einer Drehbewegung der Wendevorrichtung aus der Entleerungsposition in die aufrechte Position erfolgen oder erst in der aufrechten Position der Wendevorrichtung nach dem Entpacken angesteuert werden. Unabhängig von welchem Zeitpunkt an die Verfahrbewegung des dreidimensionalen Objektes in die Entnahmeposition zum Wechselbehälter gestartet wird, kann das Objekt nach dem Entpacken unmittelbar zur Entnahme bereitgestellt werden. Dadurch wird eine Prozessoptimierung erzielt.

Eine weitere vorteilhafte Ausgestaltung des Verfahrens sieht vor, dass nach der Einnahme der Entnahmeposition des Objektes zum Wechselbehälter ein den Wechselbehälter verschließender Deckel geöffnet und das Objekt oder die Substratplatte mit dem Objekt aus dem Wechselbehälter oder der Wechselbehälter aus der Wendevorrichtung entnommen wird.

Eine weitere vorteilhafte Ausführungsform des Verfahrens sieht vor, dass der Wechselbehälter in die Wendevorrichtung eingesetzt wird und mit der Wendevorrichtung verspannt wird, der Wechselbehälter mit einem Deckel geschlossen wird, die Wendevorrichtung aus der aufrechten Position in die Entleerungsposition übergeführt wird, das unverfestigte Aufbaumaterial aus dem Wechselbehälter durch die Schwerkraft herausgeführt oder mit einer Absaugvorrichtung abgesaugt wird, die Wendevorrichtung in die aufrechte Position zurückgeführt wird, vor, während oder nach dem Überführen der Wendevorrichtung in die aufrechte Position das Objekt in die Entnahmeposition zum Wechselbehälter übergeführt wird und der Deckel geöffnet wird und das Objekt oder die Substratplatte mit dem Objekt oder der Wechselbehälter aus der Wendevorrichtung entnommen wird. Darauffolgend kann ein neuer Verfahrenszyklus zum Entpacken von einem mit einem Wechselbehälter hergestellten dreidimensionalen Objekt erfolgen, welches durch schichtweises Aufbringen und selektives Verfestigen eines pulverförmigen Aufbaumaterials hergestellt ist.

Des Weiteren ist bevorzugt vorgesehen, dass das Objekt in einer Position der Wendevorrichtung, welche abweichend zu der aufrechten Position ist, in Richtung oder bis zur Entnahmeposition zum Wechselbehälter verfahren wird. Bevorzugt wird bereits zu Beginn der Verfahrbewegung des Wechselbehälters aus der aufrechten Position in die Entnahmeposition eine solche Verfahrbewegung des Objektes in Richtung der Entnahmeposition zum Wechselbehälter angesteuert. Dies weist den Vorteil auf, dass durch eine solche Verfahrbewegung das Aufbaumaterial zusätzlich aus dem Wechselbehälter herausgelöst und/oder herausgeführt werden kann, insbesondere bei Einnahme der Entleerungsposition, welche beispielsweise als eine Überkopfposition vorgesehen ist.

Des Weiteren ist bevorzugt vorgesehen, dass der Wechselbehälter zum Entleeren des Aufbaumaterials aus zumindest einer Hohlraumstruktur des Objektes durch eine aufeinanderfolgende und/oder zumindest teilweise überlagerte Drehbewegung um eine erste Drehachse und eine zweite Drehachse der Wendevorrichtung ansteuerbar ist. Die erste Drehachse kann beispielsweise horizontal ausgerichtet sein. Die zweite Drehachse kann beispielsweise in einer Längsachse des Wechselbehälters liegen. Dadurch wird ermöglicht, dass bei einer Hohlraumstruktur im Objekt, welches beispielsweise einer helikalen Struktur entsprechen kann, derart angesteuert wird, dass vom inneren Ende aus nach und nach das in dem der Hohlraumstruktur enthaltene Aufbaumaterial nach außen herausgefördert werden kann. Die Ansteuerung der Drehbewegung um die erste und die zweite Achse kann also sowohl zeitlich aufeinanderfolgend als auch in unterschiedlichen Zeitphasen überlagert werden. Auch können die Drehgeschwindigkeiten um die jeweilige Drehachse gleich oder voneinander abweichend und/oder überlagert angesteuert werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht der erfindungsgemäßen Vorrichtung,
Figur 2 eine weitere schematische Seitenansicht der Vorrichtung gemäß Figur 1,
Figur 3 eine schematische Seitenansicht der Vorrichtung gemäß Figur 1 mit einem in eine Wendevorrichtung eingesetzten Wechselbehälter mit einem geöffneten Deckel,
Figur 4 eine schematische Seitenansicht der Vorrichtung mit einer geschlossenen Wendevorrichtung in einer aufrechten Position,
Figur 5 eine schematische Ansicht der Vorrichtung mit einer Wendevorrichtung in einer Entleerungsposition,
Figur 6 eine schematische Seitenansicht der Vorrichtung gemäß Figur 1 in einer aufrechten Position mit geöffnetem Deckel nach dem Entpacken, und
Figur 7 eine schematische Ansicht einer alternativen Ausführungsform der Vorrichtung gemäß Figur 1.

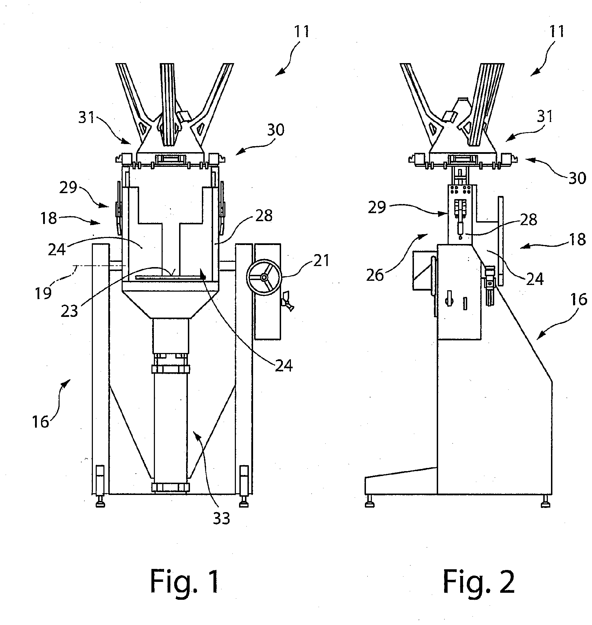

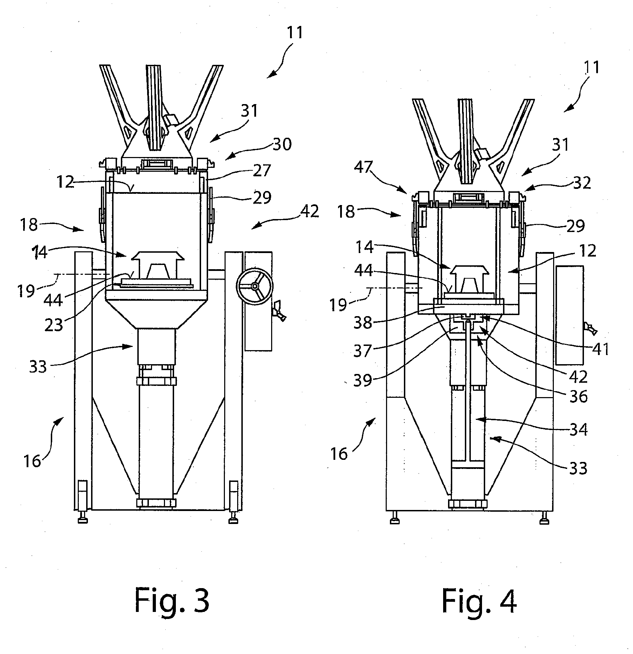

In Figur 1 ist eine erfindungsgemäße Vorrichtung 11 dargestellt. Die Figur 2 zeigt eine weitere schematische Seitenansicht der Vorrichtung 11 gemäß Figur 1. Diese Vorrichtung 11 ist zum Entpacken eines in einem Wechselbehälter 12 durch schichtweises Aufbringen und selektives Verfestigen eines pulverförmigen Aufbaumaterials hergestellten dreidimensionalen Objekts 14 (Figur 3) und das Objekt 14 umgebenden unverfestigt gebliebenen Aufbaumaterials vorgesehen. Die Herstellung des dreidimensionalen Objekts 14 erfolgt in einer nicht näher dargestellten Lasersintervorrichtung. Diese Lasersintervorrichtung umfasst eine Belichtungseinrichtung mit einem Laser, der einen Laserstrahl erzeugt, wobei der Laserstrahl über eine Umlenkvorrichtung umgelenkt und durch eine Fokussiervorrichtung und vorzugsweise über ein Einkoppelfenster in einer Wandung einer Prozesskammer zugeführt wird auf eine Arbeitsebene einer obersten Schicht des Aufbaumaterials fokussiert wird. Durch linienförmiges Verfahren des Laserstrahls können ein schichtweises Verfestigen des Aufbaumaterials und die Herstellung eines dreidimensionalen Objekts erfolgen. Bei dem Aufbaumaterial kann es sich um ein metallisches Pulver oder dergleichen handeln. Nach dem Herstellen des dreidimensionalen Objekts 14 wird der Wechselbehälter 12 aus der Lasersintervorrichtung entnommen und der Vorrichtung 11 zum Entpacken des unverfestigten Aufbaumaterials zugeführt.

Diese Vorrichtung 11 umfasst ein Grundgestell 16, welches eine Wendevorrichtung 18 aufnimmt. Diese Wendevorrichtung 18 ist um eine Drehachse 19, welche vorzugsweise horizontal ausgebildet ist, schwenkbar. Die Schwenkbewegung der Wendevorrichtung 18 um die Drehachse 19 kann manuell erfolgen, wie beispielsweise über das in Figur 1 dargestellte Handrad 21. Alternativ kann auch ein nicht näher dargestellter elektrisch, pneumatisch oder hydraulisch angesteuerter Antrieb vorgesehen sein, der insbesondere bei einer Prozessautomatisierung eingesetzt wird.

Die Wendevorrichtung 18 umfasst eine Halteplatte 23, auf welche der Wechselbehälter 12 aufsetzbar ist. Des Weiteren umfasst die Wendevorrichtung 18 zumindest eine Anlagefläche 24, welche senkrecht zur Halteplatte 23 ausgerichtet ist. Diese zumindest eine Anlagefläche 24 liegt einem Einsetzbereich 26 der Wendevorrichtung 18 gegenüber und dient als Anschlag oder Lagefixierung beim Einsetzen des Wechselbehälters 12 in die Wendevorrichtung 18. Die Wendevorrichtung 18 weist des Weiteren seitliche Wandabschnitte 28 auf, welche vorzugsweise eine Verbindung zu der Drehachse 19 bilden. An diese Wandabschnitte 28 können auch die Anlageflächen 24 angrenzen. Oberhalb der Wandabschnitte 28 ist ein Deckel 31 vorgesehen. Dieser Deckel 31 ist relativ verfahrbar zu den Wandabschnitten 28 geführt. Hierfür können beispielsweise stabförmige Führungselemente oder weitere Linearführungen vorgesehen sein. Der Deckel 31 ist gemäß den Figuren 1 und 2 in einer geöffneten Position dargestellt.

An den Wandabschnitten 28 der Wendevorrichtung 18 ist bevorzugt zumindest ein Verschluss 29 vorgesehen. Dieser dient dazu, den Deckel 31 in einer geschlossenen Position 32 zum Wechselbehälter 12 zu fixieren (Figur 4). Bevorzugt ist der zumindest eine Verschluss 29 als Schnellverschluss, Schnellspannverschluss oder dergleichen vorgesehen, um ein einfaches und schnelles Öffnen und Schließen zu ermöglichen. Bevorzugt kann die Linearführung 27, entlang welcher der Deckel 31 zu den Wandabschnitten 28 verfahrbar ist, Rückstellelemente, insbesondere Gasfedern oder dergleichen, aufweisen, sodass der Deckel 31 nach dem Öffnen des zumindest einen Verschlusses 29 selbständig in die geöffnete Position 30 gemäß Figur 1 übergeführt wird.

In einem ersten Schritt zum Entpacken des dreidimensionalen Objektes 14 im Wechselbehälter 12 wird der Wechselbehälter 12 in die Wendevorrichtung 18 eingesetzt. Eine solche eingesetzte Position des Wendebehälters 12 in der Wendevorrichtung 18 ist in Figur 3 dargestellt. Durch die Halteplatte 23 und/oder die Anlageflächen 24 wird der Wechselbehälter 12 lagerichtig in der Wendevorrichtung 18 aufgenommen.

Die Wendevorrichtung 18 weist an einer Unterseite eine Antriebseinrichtung 33 auf. Diese Antriebseinrichtung 33 umfasst einen Hubzylinder 34 (Figur 4). Diese Antriebseinrichtung 33 ist gemeinsam mit der Wendevorrichtung 18 um die Drehachse 19 drehbar.

Des Weiteren ist bevorzugt vorgesehen, dass zwischen dem Wechselbehälter 12 und der Antriebseinrichtung 33 eine Spannvorrichtung 36 vorgesehen ist. Eine solche Spannvorrichtung 36 ist schematisch in Figur 4 dargestellt. Diese Spannvorrichtung 36 umfasst ein erstes Spannelement 37, welches beispielsweise an einer Unterseite eines Kolbens 38 des Wechselbehälters 12 angeordnet oder in einem Kolben 38 des Wechselbehälters 12 integriert ist. Gegenüberliegend ist an dem Hubzylinder 34 ein weiteres Spannelement 39 vorgesehen. Eines der beiden Spannelemente 37, 39 umfasst einen Fang- und/oder Ausrichtdorn 41, das andere Spannelement 39, 37 umfasst eine komplementäre Aufnahme 42. Beim einander Zuordnen der Spannelemente 37, 39 richten sich diese zueinander aus und greifen selbständig ineinander ein. Dadurch ist der Kolben 38 zum Hubzylinder 34 fixiert.

Auf dem Kolben 38 des Wechselbehälters 12 ist vorteilhafterweise auswechselbar eine Substratplatte 44 vorgesehen, auf welcher das dreidimensionale Objekt 14 aufgebaut ist. Die erste Schicht des dreidimensionalen Objektes 14 ist unmittelbar mit der Substratplatte 44 verbunden. Die weiteren Schichten bauen sich auf der ersten Schicht auf, um das Objekt 14 zu bilden.

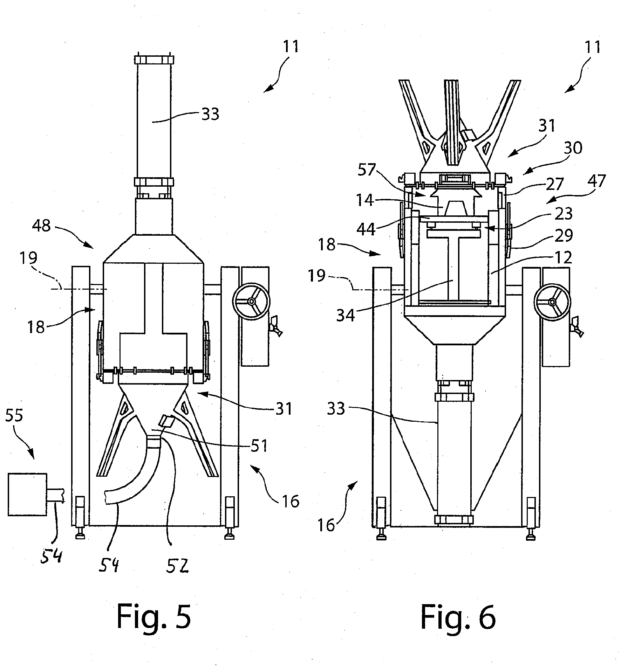

Nach dem Einsetzen des Wechselbehälters 12 in die Wendevorrichtung 18 wird der Deckel 31 in eine geschlossene Position 32 übergeführt (Figur 4). Der zumindest eine Verschluss 29 wird geschlossen. Darauffolgend wird die Wendevorrichtung 18 aus der aufrechten Position 47 gemäß Figur 4 durch eine Drehbewegung um die Drehachse 19 in eine Entleerungsposition 48 übergeführt, welche beispielsweise in Figur 5 dargestellt ist. Dabei kann die Wendevorrichtung 18 eine Schwenkbewegung um 180° durchführen. In dieser Entleerungsposition 48 oder Überkopfposition kann das unverfestigte Aufbaumaterial in einen am Deckel 31 vorgesehenen Auffangbehälter 51 fallen. Am anderen Ende des Auffangbehälters 51 ist eine Abgabeöffnung 52 vorgesehen. Diese kann mit einem sich darunter befindenden und nicht näher dargestellten Auffangbehälter verbunden werden. An diese Abgabeöffnung 52 kann auch ein Absaugschlauch 54 angeschlossen werden, über welchen durch eine Absaugvorrichtung 55 das verfestigte Aufbaumaterial abgesaugt und einem Speicher zugeführt werden kann. Bevor das aufgesaugte Aufbaumaterial dem Speicher zugeführt wird, kann dieses noch gefiltert beziehungsweise gesiebt werden, um Verunreinigungen zu eliminieren. Somit kann das unverfestigte Aufbaumaterial für einen nachfolgenden Herstellungsprozess weiter verwendet werden.

In der Entleerungsposition kann der Deckel 31 auch zeitweise geöffnet werden. Dies ist beispielsweise dann von Vorteil, wenn in dieser Position eine manuelle Reinigung vorgenommen werden soll.

Nach dem Entpacken des dreidimensionalen Objektes 14 wird die Wendevorrichtung 18 wieder in die aufrechte Position 47 übergeführt, wir dies in Figur 6 dargestellt ist. Dabei kann eine Drehung der Wendevorrichtung 18 in entgegengesetzter Drehrichtung als beim Überführen aus der aufrechten Position 47 in die Entleerungsposition 48 erfolgen. Ebenso kann die Rotationsrichtung beibehalten werden, sodass die Wendevorrichtung vollständig um 360° gedreht wird.

In der aufrechten Position 47 wird das dreidimensionale Objekt 14 in eine Entnahmeposition 57 zum Wechselbehälter 12 durch die Antriebseinrichtung 33 übergeführt. Der Hubzylinder 34 wird ausgefahren, um das dreidimensionale Objekt 14 in der Entnahmeposition 57 anzuordnen. Die Ansteuerung der Verfahrbewegung des Hubzylinders 34 kann bereits in der Entleerungsposition 48 der Wendevorrichtung 12 beginnen. Diese Ansteuerung der Verfahrbewegung des Hubzylinders 34 kann vor oder nach dem Öffnen des Deckels 31 in der aufrechten Position 47 der Wendevorrichtung 12 erfolgen. Im Ausführungsbeispiel gemäß Figur 6 wird die Wendevorrichtung 18 in die aufrechte Position 47 übergeführt und der zumindest eine Verschluss 29 geöffnet, sodass der Deckel 31 in einer abgehobenen Position zum Wechselbehälter 12 angeordnet wird. Darauffolgend verfährt der Hubzylinder 34 das dreidimensionale Objekt 14 in die Entnahmeposition 47. Anschließend wird die Substratplatte 44 aus dem Wechselbehälter 12 zusammen mit dem Objekt 14 entnommen. Alternativ kann auch der gesamte Wechselbehälter 12 aus der Wendevorrichtung 18 entnommen werden. Ebenso kann auch nur das Objekt 14 entnommen werden.

Der Deckel 31 weist bevorzugt an seiner Außenseite ein Gestell, insbesondere ein Dreibein auf. Ein solches Gestell, insbesondere Dreibein, kann dazu dienen, dass der Deckel 31 eine selbständige Standposition einnehmen kann, beispielsweise dann, wenn dieser mit dem Wechselbehälter 12 vollständig lösbar verbunden ist. Des Weiteren kann vorgesehen sein, dass der Wechselbehälter 12 in eine Entleerungsposition 48 abgestellt werden kann, sofern das Wenden aus einer aufrechten Position 47 in eine Entleerungsposition 48 und ein anschließendes Absaugen getrennt wird. Darüber hinaus kann der Deckel 31 auch mit einem daran angeschlossenen Absaugelement, insbesondere Absaugschlauch, sicher auf dem Gestell abgestellt werden.

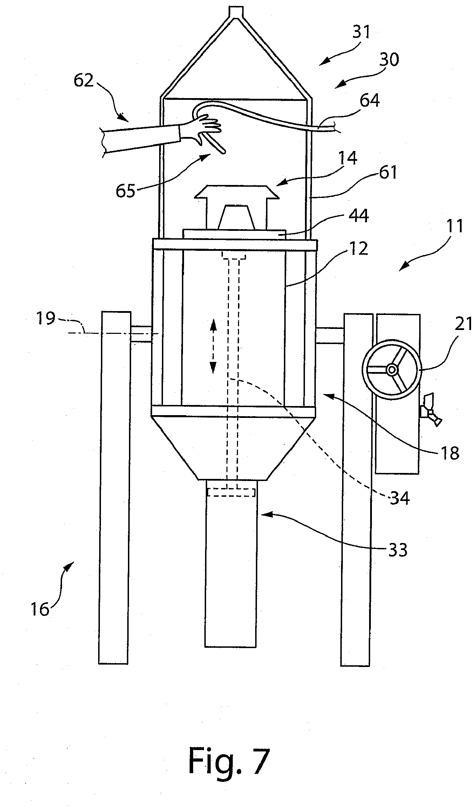

In Figur 7 ist eine alternative Ausführungsform der Vorrichtung 11 zu den Figuren 1 und 2 dargestellt. Diese Ausführungsform gemäß Figur 7 weicht lediglich dahingehend von der vorbeschriebenen Ausführungsform der Wendevorrichtung 18 ab, dass der Deckel 31 einen geschlossenen Wandabschnitt 61 aufweist. Dieser Wandabschnitt 61 ist insbesondere zylindrisch ausgebildet und entspricht der Höhe des Wechselbehälters 12 oder nahezu der Höhe des Wechselbehälters 12. Dadurch ist ermöglicht, dass das dreidimensionale Objekt 14 in der Entnahmeposition 57 bei geschlossenem Deckel 31 zum Wechselbehälter 12 anordenbar ist und mittels zumindest eines Handschuheingriffs 62 ein manuelles Entpacken des unverfestigten Aufbaumaterials ermöglicht ist. Vorzugsweise wird mittels eines Druckluftschlauchs 64 einer Druckluftpistole Druckluft zugeführt, sodass das Objekt 14 abgeblasen werden kann. Alternativ kann ein Saugrüssel 65 zum manuellen Absaugen von Resten des Aufbaumaterials zum Einsatz kommen. Im Wandabschnitt 61 kann des Weiteren eine Entnahmeöffnung vorgesehen sein. Alternativ kann eine Linearführung 27 vorgesehen sein, um den Deckel 31 gegenüber dem Wechselbehälter 12 derart abzuheben, dass dieser auch zusammen mit dem Objekt 14 in der Entnahmeposition 57 aus der Wechselvorrichtung 18 entnommen werden kann. Im Übrigen gelten die Ausführungsformen und Varianten der Vorrichtung 11 gemäß den Figuren 1 bis 6 auch für die in Figur 7 dargestellte Vorrichtung 11.

Des Weiteren kann alternativ vorgesehen sein, dass die Wendevorrichtung 18 zusätzlich zur ansteuerbaren Drehbewegung um die Drehachse 19, welche vorzugsweise horizontal ausgerichtet ist, um ihre Längsachse drehbar angetrieben werden kann. Dies ermöglicht eine weitere konturoptimierte Entfernung von unverfestigtem Aufbaumaterial in allen Raumrichtungen.

Des Weiteren kann vorteilhafterweise eine Vibrationsvorrichtung und/oder Klopfvorrichtung vorgesehen sein, welche auf den Wechselbehälter 12 oder die Substratplatte einwirkt. Alternativ oder zusätzlich kann auch eine Vibrationsvorrichtung und/oder Klopfvorrichtung auch auf das Objekt 14 direkt einwirken, bspw. wenn die Vorrichtung innerhalb des Deckels 31 angeordnet ist. Dadurch kann das Entfernen des unverfestigten Aufbaumaterials des Weiteren gefördert werden.

Alternativ zu den vorbeschriebenen Ausführungsformen kann die Öffnungs- und Schließbewegung des Deckels 31 zum Wechselbehälter 12 auch durch einen Antrieb angesteuert werden. Insbesondere bei der Einbindung in eine Prozessautomatisierung kann dies vorgesehen sein.

Durch die erfindungsgemäße Vorrichtung 11 wird somit ein schnelles Entpacken sowie ein hermetisch abgeriegeltes Entpacken des unverfestigten Aufbaumaterials ermöglicht. Diese Vorrichtung 11 ermöglicht ebenfalls in einem automatisierten Prozess eingebunden zu werden. Darüber hinaus kann auch noch heißes Aufbaumaterial entpackt werden, wodurch des Weiteren eine Prozessoptimierung ermöglicht wird.

## Patentansprüche

1. Vorrichtung zum Entpacken eines in einem Wechselbehälter (12) durch schichtweises Aufbringen und selektives Verfestigen eines pulverförmigen Aufbaumaterials hergestellten dreidimensionalen Objekts (14) aus dem das Objekt (14) umgebenden, unverfestigt gebliebenen Aufbaumaterial, mit einer Wendevorrichtung (18), welche den Wechselbehälter (12) aus einer aufrechten Position (47) in eine Entleerungsposition (48) zum Abführen des unverfestigten Aufbaumaterials um eine horizontal ausgerichtete Drehachse (19) dreht, und der Wechselbehälter (12) in die Wendevorrichtung (18) einsetzbar und fixierbar ist, und die Wendevorrichtung (18) eine Halteplatte (23) aufweist, auf der der Wechselbehälter (12) aufsetzbar ist und eine Spannvorrichtung (36) umfasst, durch welche der Wechselbehälter (12) zur Halteplatte (23) lösbar fixiert ist, **dadurch gekennzeichnet, dass** die Wendevorrichtung (18) eine Antriebseinrichtung (33) aufweist, durch welche das dreidimensionale Objekt (14) nach dem Entpacken von dem unverfestigten Aufbaumaterial in eine Entnahmeposition (57) zum Wechselbehälter (12) verfahrbar ist, und dass die Antriebseinrichtung (33) gemeinsam mit der Wendevorrichtung (18) um die Drehachse (19) drehbar ist.

2. Vorrichtung nach Anspruch 1, **dadurch gekennzeichnet, dass** durch die Antriebsvorrichtung (33) eine das dreidimensionale Objekt (14) tragende Substratplatte (44) in die Entnahmeposition (57) zum Wechselbehälter (12) fahrbar ist.

3. Vorrichtung nach Anspruch 1, **dadurch gekennzeichnet, dass** an dem Wechselbehälter (12), insbesondere an einem Kolben (38) des Wechselbehälters (12), ein Spannelement (37) vorgesehen ist und an der Antriebseinrichtung (33) ein komplementäres Spannelement (39) vorgesehen ist, welche beim Einsetzen des Wechselbehälters (12) in die Wendevorrichtung (18) ineinandergreifen und sich lösbar verspannen und vorzugsweise Vorrichtung nach Anspruch 1, **dadurch gekennzeichnet, dass** die Spannvorrichtung (36) einen Verspannmechanismus aufweist, bei dem ein Spannelement (37, 39) mit einem Fang- und Ausrichtdorn (41) und das weitere Spannelement (39, 37) mit einer komplementären Aufnahme (42) ausgebildet ist.

4. Vorrichtung nach einem der vorhergehenden Ansprüche, **dadurch gekennzeichnet, dass** die Wendevorrichtung (18) einen Einsetzbereich (26) oder eine Einsetzöffnung aufweist, dem gegenüberliegend zumindest eine Anlagefläche (24) vorgesehen ist, die zur Halteplatte (23) zum lagerichtigen Einsetzen des Wechselbehälters (12) ausgerichtet ist.

5. Vorrichtung nach einem der vorhergehenden Ansprüche, **dadurch gekennzeichnet, dass** die Wendevorrichtung (18) einen Deckel (31) zum Verschließen des Wechselbehälters (12) aufweist, der vorzugsweise einen Auffangbehälter (51) mit einer daran angeordneten Abgabeöffnung (52) aufweist und vorzugsweise der Deckel (31) oder ein Wandabschnitt (28) der Wendevorrichtung (18) zumindest einen Verschluss (29), insbesondere Schnellspannverschluss, aufweist, durch welchen der Deckel (31) in einer geschlossenen Position (32) mit dem Wechselbehälter (12) verspannbar ist.

6. Vorrichtung nach Anspruch 5, **dadurch gekennzeichnet, dass** in der Entleerungsposition (48) der Wendevorrichtung (18) die Abgabeöffnung (52) einen Auffangbehälter (51) zur Aufnahme des unverfestigten Aufbaumaterials vorgesehen ist oder dass an der Abgabeöffnung (52) ein Absaugschlauch (54) einer Absaugvorrichtung (55) anschließbar ist, über welchen das unverfestigte Aufbaumaterial absaugbar ist.

7. Vorrichtung nach einem der Ansprüche 5 oder 6, **dadurch gekennzeichnet, dass** der Deckel (31) an zumindest einem Wandabschnitt (28) der Wendevorrichtung (18) aufgenommen ist und aus einer Öffnungsposition (30) in eine Schließposition (32), vorzugsweise mittels einer Linearführung (27), überführbar ist.

8. Vorrichtung nach einem der vorhergehenden Ansprüche, **dadurch gekennzeichnet, dass** die Antriebseinrichtung (33) als ein Hubzylinder (34) ausgebildet ist, der vorzugsweise pneumatisch, hydraulisch oder elektrisch angetrieben ist und vorzugsweise die Antriebseinrichtung (33) einen einstellbaren Anschlag aufweist, durch welchen eine Ausfahrbewegung des Hubzylinders (34) begrenzt ist.

9. Vorrichtung nach einem der vorhergehenden Ansprüche, **dadurch gekennzeichnet, dass** die Wendevorrichtung (18) um ihre Längsachse drehbar angetrieben ist.

10. Vorrichtung nach einem der vorhergehenden Ansprüche, **dadurch gekennzeichnet, dass** der Deckel (31) ein Bauvolumen aufweist, in welchem ein dreidimensional hergestelltes Objekt (14) in einer Entnahmeposition (57) zum Wechselbehälter (12) anordenbar ist und vorzugsweise zumindest einen Handschuheingriff (62) für ein manuelles Entpacken mittels einer Drucklufteinrichtung (64, 65) vorgesehen ist.

11. Verfahren zum Entpacken einer in einem Wechselbehälter (12) durch schrittweises Aufbringen und selektives Verfestigen eines pulverförmigen Aufbaumaterials hergestellten dreidimensionalen Objekts (14) aus dem das Objekt (14) umgebenden unverfestigt gebliebenen Aufbaumaterials, bei dem ein Wechselbehälter (12) in eine Wendevorrichtung (18) eingesetzt und auf einer Halteplatte (23) der Wendevorrichtung fixiert wird, bei dem der Wechselbehälter (12) durch die Wendevorrichtung (18) aus einer aufrechten Position (47) in eine Entleerungsposition (48) zum Abführen des unverfestigten Aufbaumaterials gedreht wird, bei dem nach dem Entpacken des dreidimensionalen Objektes (14) die Wendevorrichtung (18) in die aufrechte Position (47) übergeführt wird, **dadurch gekennzeichnet, dass** das Objekt (14) während oder nach dem Entpacken von unverfestigtem Aufbaumaterial mit einer an der Wendevorrichtung (18) vorgesehenen Antriebseinrichtung (33) in eine Entnahmeposition (57) zum Wechselbehälter (12) verfahren wird.

12. Verfahren nach Anspruch 11, **dadurch gekennzeichnet, dass** nach der Einnahme der Entnahmeposition (57) des dreidimensional hergestellten Objektes (14) in dem Wechselbehälter (12) ein den Wechselbehälter (12) verschließender Deckel (31) geöffnet und das Objekt (14) oder eine das Objekt (14) aufnehmende Substratplatte (44) oder der Wechselbehälter (12) aus der Wendevorrichtung (18) entnommen wird.

13. Verfahren nach Anspruch 11, **dadurch gekennzeichnet,**
- **dass** der Wechselbehälter (12) in die Wendevorrichtung (18) eingesetzt und mit der Wendevorrichtung (18) verspannt wird,
- **dass** der Wechselbehälter (12) mit einem Deckel (31) geschlossen wird,
- **dass** die Wendevorrichtung (18) aus der aufrechten Position (47) in die Entleerungsposition (48) gedreht wird,
- **dass** das unverfestigte Aufbaumaterial aus dem Wechselbehälter (12) durch eine Abgabeöffnung (52) im Deckel (31) mittels Schwerkraft herausgeführt oder mittels einer Absaugvorrichtung (55) abgesaugt wird,
- **dass** die Wendevorrichtung (18) in die aufrechte Position (47) übergeführt wird,
- **dass** vor, während oder nach dem Überführen der Wendevorrichtung (18) in die aufrechte Position (47) das dreidimensionale Objekt (14) in die Entnahmeposition (57) zum Wechselbehälters (12) übergeführt wird,
- **dass** in der aufrechten Position (47) vor oder nach dem Überführen des dreidimensionalen Objektes in die Entnahmeposition (57) zum Wechselbehälter (12) der Deckel (31) geöffnet wird und
- **dass** das dreidimensional hergestellte Objekt (14) oder die Substratplatte (44) mit dem darauf angeordneten dreidimensional hergestellten Objekt (14) oder der Wechselbehälter (12) aus der Wendevorrichtung (18) entnommen wird.

14. Verfahren nach einem der Ansprüche 11 bis 13, **dadurch gekennzeichnet, dass** das Objekt (14) in einer Position der Wendevorrichtung (18), abweichend zu der aufrechten Position (47), insbesondere in der Entleerungsposition (48), in Richtung oder bis zur Entnahmeposition (57) zum Wechselbehälter (12) verfahren wird.

15. Verfahren nach einem der Ansprüche 11 bis 174, **dadurch gekennzeichnet, dass** der Wechselbehälter (12) zum Entleeren des Aufbaumaterials aus zumindest einer Hohlraumstruktur des Objekts (14) durch eine aufeinanderfolgende und/oder zumindest zeitweise überlagerte Drehbewegung um eine erste, insbesondere horizontal ausgerichtete, Drehachse (19) und eine zweite, insbesondere um eine Längsachse des Wechselbehälters (12) ausgerichtete Drehachse, angesteuert wird.

## Claims

1. Device for unpacking a three-dimensional object (14), manufactured in a swap container (12) by applying layer by layer and solidifying selectively a powdery structural material, from the structural material that surrounds the object (14) and has remained unsolidified, comprising a turning device (18) that rotates the swap container (12) about a horizontal axis of rotation (19), from an upright position (47) into an unloading position (48) for discharging the unsolidified structural material, and the swap container (12) is insertable and fixable in the turning device (18) and the turning device (18) comprises a retaining plate (23) on which the swap container (12) is placeable and comprises a clamping means (36) by which the swap container (12) is detachably fixed to the retaining plate (23), **characterized in that** the turning device (18) comprises a drive means (33) by which the three-dimensional object (14) is displacable into a removal position (57) relative to the swap container (12), following the unpacking of the unsolidified structural material, and **in that** the drive means (33) is rotatable, together with the turning device (18), about the axis of rotation (19).

2. Device according to claim 1, **characterized in that** a substrate plate (44) carrying the three-dimensional object (14) is movable, by the drive means (33), into the removal position (57) with respect to the swap container (12).

3. Device according to claim 1, **characterized in that** a clamping element (37) is provided on the swap container (12), in particular on a piston (38) of the swap container (12), and a complementary clamping element (39) is provided on the drive means (33), which clamping elements engage in and detachably brace one another when the swap container (12) is inserted into the turning device (18), and preferably the clamping means (36) comprises a bracing mechanism, in which one clamping element (37, 39) is designed having a capture and orientation pin (41), and the further clamping element (39, 37) is designed having a complementary receptacle (42).

4. Device according to any of the preceding claims, **characterized in that** the turning device (18) comprises an insertion region (26) or an insertion opening, which is provided opposite at least one contact surface (24) that is oriented towards the retaining plate (23) for the purpose of correctly positioned insertion of the swap container (12).

5. Device according to any of the preceding claims, **characterized in that** the turning device (18) comprises a cover (31) for closing the swap container (12), which cover preferably comprises a collecting container (51) having a discharge opening (52) arranged thereon, and preferably the cover (31) or a wall portion (28) of the turning device (18) comprises at least one fastener (29), in particular a quick-clamping fastener, by means of which the cover (31) can be braced by the swap container (12), in a closed position (32).

6. Device according to claim 5, **characterized in that**, in the unloading position (48) of the turning device (18), the discharge opening (52) of a collecting container (51) is provided for receiving the unsolidified structural material, or **in that** a suction hose (54) of a suction means (55) is connectable to the discharge opening (52), via which hose the unsolidified structural material is suctionable out.

7. Device according to any of claims 5 or 6, **characterized in that** the cover (31) is received on at least one wall portion (28) of the turning device (18) and is transferrable from an open position (30) into a closed position (32), preferably by means of a linear guide (27).

8. Device according to any of the preceding claims, **characterized in that** the drive means (33) is designed as a lifting cylinder (34) which is preferably driven pneumatically, hydraulically or electrically, and preferably the drive means (33) comprises an adjustable stop, by means of which an extension movement of the lifting cylinder (34) is limited.

9. Device according to any of the preceding claims, **characterized in that** the turning device (18) is driven so as to be rotatable about the longitudinal axis thereof.

10. Device according to any of the preceding claims, **characterized in that** the cover (31) comprises a construction volume in which a three-dimensionally manufactured object (14) is arrangeable in a removal position (57) relative to the swap container (12), and preferably at least one glove engagement point (62) is provided for the purpose of manual unpacking using a compressed air device (64, 65).

11. Method for unpacking a three-dimensional object (14), manufactured in a swap container (12) by applying layer by layer and solidifying selectively a powdery structural material, from the structural material that surrounds the object (14) and has remained unsolidified by means of a device (11) according to any of claims 1 to 10, in which a swap container (12) is inserted into a turning device (18) and fixed to a retaining plate (23) of the turning device, in which the swap container (12) is rotated by the turning device (18) from an upright position (47) into an unloading position (48) for discharging the unsolidified structural material, in which the turning device (18) is transferred into the upright position (47) following unpacking of the three-dimensional object (14), **characterized in that** the object (14) is displaced into a removal position (57) relative to the swap container (12), using a drive means (33) provided on the turning device (18), during or after the unpacking of unsolidified structural material.

12. Method according to claim 11, **characterized in that**, after the removal position (57) of the three-dimensionally manufactured object (14) in the swap container (12) has been assumed, a cover (31) that closes the swap container (12) is opened, and the object (14) or a substrate plate (44) that receives the object (14), or the swap container (12), is removed from the turning device (18).

13. Method according to claim 11, **characterized in that**
- the swap container (12) is inserted into the turning device (18) and braced by the turning device (18),
- the swap container (12) is closed by a cover (31),
- the turning device (18) is rotated from the upright position (47) into the unloading position (48),
- the unsolidified structural material is conducted out of the swap container (12) through a discharge opening (52) in the cover (31) by means of gravity, or is suctioned out using a suction means (55),
- the turning device (18) is transferred into the upright position (47),
- the three-dimensional object (14) is transferred into the removal position (57) relative to the swap container (12), prior to, during or after transfer of the turning device (18) into the upright position (47),
- in the upright position (47), the cover (31) is opened prior to or after transfer of the three-dimensional object into the removal position (57) with respect to the swap container (12), and
- the three-dimensionally manufactured object (14), or the substrate plate (44) comprising the three-dimensionally manufactured object (14) arranged thereon, or the swap container (12), is removed from the turning device (18).

14. Method according to any of claims 11 to 13, **characterized in that** the object (14) is displaced towards or in the removal position (57) relative to the swap container (12), in a position of the turning device (18) that deviates from the upright position (47), in particular in the unloading position (48).

15. Method according to any of claims 11 to 14, **characterized in that** the swap container (12) is actuated by means of a successive and/or at least partially superimposed rotational movement about a first, in particular horizontal, axis of rotation (19) and a second axis of rotation which is in particular oriented around a longitudinal axis of the swap container (12), for the purpose of unloading the structural material out of at least one hollow structure of the object (14).

## Revendications

1. Dispositif destiné à extraire un objet tridimensionnel (14), fabriqué dans un récipient interchangeable (12) par application couche par couche et solidification sélective d'un matériau constitutif pulvérulent, du matériau constitutif resté à l'état non solidifié qui entoure ledit objet (14), pourvu d'un dispositif de retournement (18) qui fait tourner le récipient interchangeable (12) autour d'un axe de rotation (19) orienté de manière horizontale pour le faire passer d'une position debout (47) à une position de vidage (48) en vue d'évacuer le matériau constitutif non solidifié, et le récipient interchangeable (12) pouvant être inséré et fixé dans le dispositif de retournement (18), et le dispositif de retournement (18) présentant une plaque de retenue (23) sur laquelle peut être placé le récipient interchangeable (12) et comprenant un dispositif de serrage (36) grâce auquel le récipient interchangeable (12) est fixé de manière amovible par rapport à la plaque de retenue (33), **caractérisé en ce que** le dispositif de retournement (18) présente un dispositif d'entraînement (33) grâce auquel l'objet tridimensionnel (14), après avoir été extrait du matériau constitutif non solidifié, peut être déplacé jusque dans une position de prélèvement (57) par rapport au récipient interchangeable (12), et **en ce que** le dispositif d'entraînement (33) peut tourner conjointement avec le dispositif de retournement (18) autour de l'axe de rotation (19).

2. Dispositif selon la revendication 1, **caractérisé en ce qu'**une plaque de substrat (44) portant l'objet tridimensionnel (14) peut, grâce au dispositif d'entraînement (33), être déplacée jusque dans une position de prélèvement (57) par rapport au récipient interchangeable (12).

3. Dispositif selon la revendication 1, **caractérisé en ce que** sur le récipient interchangeable (12), en particulier sur un piston (38) du récipient interchangeable (12), est prévu un élément de serrage (37) et que sur le dispositif d'entraînement (33) est prévu un élément de serrage complémentaire (39) lesquels engrènent l'un dans l'autre et se bloquent par serrage de manière amovible lorsque le récipient interchangeable (12) est inséré dans le dispositif de retournement (18), et **en ce que** le dispositif de serrage (36) présente de préférence un mécanisme de serrage dont un élément de serrage (37, 39) est pourvu d'un mandrin d'arrêt et d'alignement (41) et l'autre élément de serrage (39, 37) est pourvu d'une réception complémentaire (42).

4. Dispositif selon l'une quelconque des revendications précédentes, **caractérisé en ce que** le dispositif de retournement (18) présente une zone d'insertion (26) ou une ouverture d'insertion à l'opposé de laquelle est prévue au moins une surface d'appui (24) qui est orientée par rapport à la plaque de retenue (23) en vue de permettre l'insertion du récipient interchangeable (12) dans la position correcte.

5. Dispositif selon l'une quelconque des revendications précédentes, **caractérisé en ce que** le dispositif de retournement (18) présente un couvercle (31) destiné à fermer le récipient interchangeable (12) lequel présente de préférence un réservoir de récupération (51) pourvu d'une ouverture d'évacuation (52) qui est disposée sur celui-ci, et **en ce que** de préférence le couvercle (31) ou une partie de paroi (28) du dispositif de retournement (18) présente au moins un dispositif de fermeture (29), en particulier un dispositif de fermeture à fixation rapide par serrage, grâce auquel le couvercle (31) peut, dans une position fermée (32), être fixé par serrage avec le récipient interchangeable (12).

6. Dispositif selon la revendication 5, **caractérisé en ce que**, lorsque le dispositif de retournement (18) se trouve dans la position de vidage (48), un réservoir de récupération (51) destiné à recevoir le matériau constitutif non solidifié est prévu sur l'ouverture d'évacuation (52) ou que sur ladite ouverture d'évacuation (52) peut être raccordé un tuyau d'aspiration (54) d'un dispositif d'aspiration (55) par l'intermédiaire duquel le matériau constitutif non solidifié peut être aspiré.

7. Dispositif selon l'une quelconque des revendications 5 ou 6, **caractérisé en ce que** le couvercle (31) est reçu sur au moins une partie de paroi (28) du dispositif de retournement (18) et peut passer d'une position d'ouverture (30) à une position de fermeture (32), et ce de préférence au moyen d'un guide linéaire (27).

8. Dispositif selon l'une quelconque des revendications précédentes, **caractérisé en ce que** le dispositif d'entraînement (33) est réalisé sous la forme d'un vérin (34) qui est entraîné de préférence de manière pneumatique, hydraulique ou électrique et que le dispositif d'entraînement (33) présente de préférence une butée réglable permettant de limiter un mouvement de sortie du vérin (34).

9. Dispositif selon l'une quelconque des revendications précédentes, **caractérisé en ce que** le dispositif de retournement (18) est entraîné de manière à tourner autour de son axe longitudinal.

10. Dispositif selon l'une quelconque des revendications précédentes, **caractérisé en ce que** le couvercle (31) présente un volume de construction dans lequel un objet (14) réalisé en 3D peut être disposé dans une position de prélèvement (57) par rapport au récipient interchangeable (12) et **en ce qu'**il est prévu de préférence au moins un accès par manchon ganté (62) pour une extraction manuelle au moyen d'un dispositif à air comprimé (64, 65).

11. Procédé destiné à extraire un objet tridimensionnel (14), fabriqué dans un récipient interchangeable (12) par application couche par couche et solidification sélective d'un matériau constitutif pulvérulent, du matériau constitutif resté à l'état non solidifié qui entoure ledit objet (14) grâce à un dispositif (11) selon l'une quelconque des revendications 1 à 10, lors duquel un récipient interchangeable (12) est inséré dans un dispositif de retournement (18) et est fixé sur une plaque de retenue (23) dudit dispositif de retournement, lors duquel le récipient interchangeable (12) effectue grâce au dispositif de retournement (18) un mouvement de rotation et passe d'une position debout (47) à une position de vidage (48) en vue d'évacuer le matériau constitutif non solidifié, lors duquel le dispositif de retournement (18) passe, après l'extraction de l'objet tridimensionnel (14), dans la position debout, **caractérisé en ce que**, pendant ou après son extraction du matériau constitutif non solidifié, l'objet (14) est déplacé grâce à un dispositif d'entraînement (33) prévu sur le dispositif de retournement (18) dans une position de prélèvement (57) par rapport au récipient interchangeable (12).

12. Procédé selon la revendication 11, **caractérisé en ce que**, après que l'objet (14) réalisé en 3D a pris la position de prélèvement (57) dans le récipient interchangeable (12), un couvercle (31) qui ferme le récipient interchangeable (12) est ouvert et l'objet (14) ou une plaque de substrat (44) recevant l'objet (14) ou le récipient interchangeable (12) est retiré(e) du dispositif de retournement (18).

13. Procédé selon la revendication 11, **caractérisé en ce que**
- le récipient interchangeable (12) est inséré dans le dispositif de retournement (18) et est fixé par serrage avec ledit dispositif de retournement (18),
- le récipient interchangeable (12) est fermé avec un couvercle (31)
- le dispositif de retournement (18) passe, par mouvement de rotation, de la position debout (47) à la position de vidage (48),
- le matériau constitutif non solidifié est évacué du récipient interchangeable (12) par une ouverture d'évacuation (52) située dans le couvercle (31) grâce à la force de gravité ou par aspiration au moyen d'un dispositif d'aspiration (55),
- le dispositif de retournement (18) passe dans la position debout (47),
- avant, pendant ou après le passage du dispositif de retournement (18) dans la position debout (47), l'objet tridimensionnel (14) passe dans la position de prélèvement (57) par rapport au récipient interchangeable (12),
- dans ladite position debout (47), et ce avant ou après que l'objet tridimensionnel soit passé dans la position de prélèvement (57) par rapport au récipient interchangeable (12), le couvercle (31) est ouvert, et
- l'objet (14) réalisé en 3D ou la plaque de substrat (44) avec l'objet (14) réalisé en 3D disposé dessus ou le récipient interchangeable (12) est retiré(e) du dispositif de retournement (18) .

14. Procédé selon l'une quelconque des revendications 11 à 13, **caractérisé en ce que** l'objet (14) est déplacé vers ou jusqu'à la position de prélèvement (57) par rapport au récipient interchangeable (12) lorsque le dispositif de retournement (18) se trouve dans une position qui est autre que la position debout (47), en particulier dans la position de vidage (48).

15. Procédé selon l'une quelconque des revendications 11 à 14, **caractérisé en ce que** le récipient interchangeable (12), en vue d'évacuer le matériau constitutif d'au moins une structure creuse de l'objet (14), est activé de manière à effectuer un mouvement de rotation autour d'un premier axe de rotation (19) orienté en particulier de manière horizontale et un mouvement de rotation autour d'un deuxième axe de rotation orienté en particulier selon un axe longitudinal du récipient interchangeable (12), et ce de manière successive et/ou de manière superposée, au moins par moments.
